# EUROPEAN PATENT APPLICATION

(11) **EP 4 803 319 A1**
(43) Date of publication of application: **09.09.2026**
(21) Application number: 24885487.9
(22) Date of filing: 18.10.2024
(51) Int. Cl.: B41J 11/42, B65H 37/04, B65H 39/16

(54) **LAMINATION DEVICE**

(30) Priority: 31.10.2023 JP 2023187224
(71) Applicant: Brother Kogyo Kabushiki Kaisha, Nagoya-shi, Aichi 467-8561 (JP)
(72) Inventor: OOKA, Kazuaki, Nagoya-shi, Aichi 467-8562 (JP); WANG, Yuwen, Nagoya-shi, Aichi 467-8562 (JP); SAKAI, Ryosuke, Nagoya-shi, Aichi 467-8562 (JP)
(74) Representative: J A Kemp LLP
(86) International application number: PCT/JP2024/037169
(87) International publication number: WO 2025/094713

(57) **Abstract**

Means for reducing deterioration in a lamination quality is provided. A laminating apparatus 1 includes: a first conveyance roller 41 which conveys a first member 101; a recording part 30 which records an image on the first member 101; a laminating roller 50 which laminates the first member 101, on which the image has been recorded, and a second member 102; and a controller 90. The controller 90 performs a conveying process for causing the first conveyance roller 41 to convey the first member 101, on which the image has been recorded by the recording part 30, to the laminating roller 50, and a first driving process for driving the laminating roller 50. The controller 90 starts the first driving process (S32) before a forward end of the first member 101 arrives at the laminating roller 50 by the conveying process (S31: Yes).

## Description

### TECHNICAL FIELD

The present invention relates to a laminating apparatus which laminates a plurality of members.

### BACKGROUND ART

A known laminating apparatus laminates a first member on which an image is recorded, and a second member. For example, a tape printing apparatus, which is described in Patent Literature 1, includes a conveyance roller pair including two feed rollers. The tape printing apparatus laminates a printing tape and a laminate film using the conveyance roller pair. This tape printing apparatus starts driving the conveyance roller pair, in response to a forward end of the printing tape, for which printing has been performed, arriving at the conveyance roller pair. The printing tape corresponds to the first member, and the laminate film corresponds to the second member.

### Citation List

[Patent Literature]
Patent Literature 1: Japanese Patent Application Laid-open No. 2009-173014

### SUMMARY

### Technical Problem:

In the tape printing apparatus described above, the forward end of the printing tape is sometimes inclined from a proper direction at a point in time at which the forward end of the printing tape arrives at the conveyance roller pair. Accordingly, in a case where the driving of the conveyance roller pair is started at the timing at which the forward end of the printing tape arrives at the conveyance roller pair, any displacement appears in the lamination between the printing tape and the laminate film, sometimes resulting in deterioration in a lamination quality.

The present invention has been achieved in view of the foregoing situation, and an object of the present invention is to provide means for reducing the deterioration in laminating quality.

### Solution to Problem:

A laminating apparatus of the present invention includes: a conveyance roller which conveys a first member; a recording part which records an image on the first member; a laminating roller which laminates the first member, on which the image has been recorded, and a second member; and a controller. The controller performs a conveying process for causing the conveyance roller to convey the first member, on which the image has been recorded by the recording part, to the laminating roller, and a first driving process for driving the laminating roller. The controller starts the first driving process before a forward end of the first member arrives at the laminating roller by the conveying process.

According to the laminating apparatus described above, by starting the driving of the laminating roller before the forward end of the first member arrives at the laminating roller, the first member and the second member can be laminated with each other, for example, immediately after the inclined forward end of the first member has arrived at the laminating roller. Therefore, before the forward end of the first member abut against and thereby is gripped by the laminating roller, the change in posture of the first member can be reduced, which leads to the reduction in deterioration in the lamination quality.

Preferably, in a case where the second member is gripped by the laminating roller, and the first member is not gripped by the laminating roller, the controller may alternately perform, in the conveying process, a process for causing the recording part to perform a recording operation for recording the image on the first member and a process for causing the conveyance roller to perform a conveyance operation for conveying the first member to a next recording position and stopping the first member at the next recording position, and the controller may stop the laminating roller after causing the conveyance roller to complete the conveyance operation in the first driving process.

Preferably, in a case where the controller causes the first member to be conveyed such that the forward end of the first member is stopped at a position upstream in a conveyance direction of a first position between the conveyance roller and the laminating roller, the controller may not perform the first driving process, and in a case where the controller causes the first member to be conveyed such that the forward end of the first member is stopped at a position downstream in the conveyance direction of the first position, the controller may perform the first driving process.

Preferably, the laminating apparatus may further include a discharge port from which a lamination finished product is discharged, wherein in a case where the controller causes the first member to be conveyed such that the forward end of the first member is stopped at a position upstream in the conveyance direction of a second position between the laminating roller and the discharge port, the controller may perform the first driving process; and in a case where the controller causes the first member to be conveyed such that the forward end of the first member is stopped at a position downstream in the conveyance direction of the second position, the controller may perform a second driving process different from the first driving process.

Preferably, during a period in which the controller performs the conveyance operation and the recording operation in the second driving process, the controller may drive the laminating roller such that tension is continuously applied to the first member between the conveyance roller and the laminating roller.

Preferably, during a period in which the controller performs the conveyance operation and the recording operation in the second driving process, the controller may drive the laminating roller such that tension is not applied to the first member between the conveyance roller and the laminating roller.

Preferably, during a period in which the controller performs the conveyance operation in the second driving process, the controller may drive the laminating roller such that tension is not applied to the first member between the conveyance roller and the laminating roller , and the controller performs the recording operation after the tension is applied to the first member between the conveyance roller and the laminating roller.

Preferably, during a period in which the controller performs the conveyance operation and the recording operation in the second driving process, the controller may continuously drive the laminating roller.

Preferably, in the second driving process, the controller may drive the laminating roller such that a conveyance distance over which the first member is conveyed by the laminating roller is smaller than a conveyance distance over which the first member is conveyed by the conveyance roller.

Preferably, in the second driving process, the controller may drive the laminating roller such that a conveyance distance over which the first member is conveyed by the laminating roller is larger than a conveyance distance over which the first member is conveyed by the conveyance roller.

Preferably, in the second driving process, the controller may start driving of the laminating roller after the controller causes the conveyance roller to complete the conveyance operation.

Preferably, in the second driving process, the controller may start driving of the laminating roller, after the controller causes the conveyance roller to start the conveyance operation and before the controller causes the conveyance roller to complete the conveyance operation.

Preferably, in the second driving process, the controller may complete driving of the laminating roller after the controller causes the recording part to start the recording operation.

### Effect of the Invention:

According to the present invention, the deterioration in the lamination quality can be reduced.

### BRIEF DESCRIPTION OF DRAWINGS

FIG. 1A is a perspective view of an appearance of a laminating apparatus 1 according to an embodiment of the present invention, and FIG. 1B is a schematic sectional view of a lamination finished product 100 produced by the laminating apparatus 1.
FIG. 2 is a vertical sectional view of the laminating apparatus 1.
FIG. 3 is a block diagram of the laminating apparatus 1.
FIG. 4 is a flow chart of a laminating process performed by a controller 90 of the laminating apparatus 1.
FIG. 5 illustrates a situation before a forward end P of a first member 101 arrives at a laminating roller 50 in the laminating apparatus 1.
FIG. 6 is a flow chart of a driving process of the laminating roller 50 performed by the controller 90 of the laminating apparatus 1.
FIG. 7A to FIG. 7E illustrate, respectively, first to fifth driving modes of a second conveying process performed by the controller 90 of the laminating apparatus 1.
FIG. 8 illustrates a situation before the forward end P of the first member 101 arrives at a laminating roller 50 in a laminating apparatus according to a modification.

### DESCRIPTION OF THE EMBODIMENT

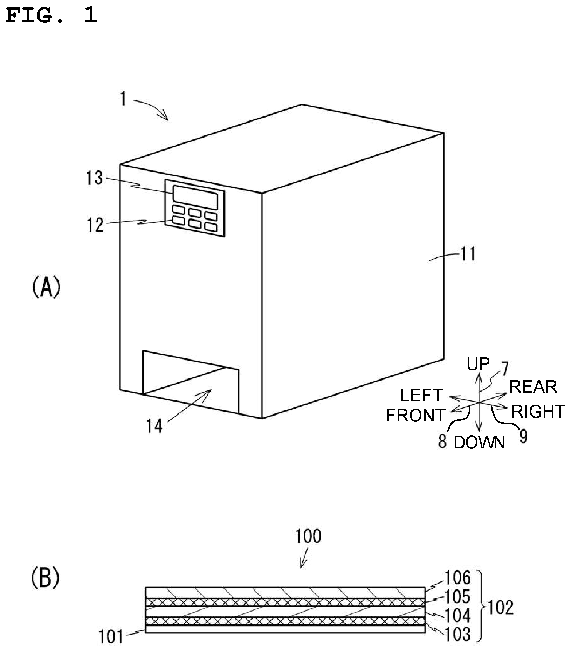

A laminating apparatus 1 according to an embodiment of the present invention will be described. Note that the embodiment described below is merely an example of the present invention, and thus the embodiment of the present invention can be appropriately changed within a range without changing the gist or essential characteristics of the present invention. In the following description, the advance directed from a starting point to an end point of an arrow is expressed as "orientation", and going forth and back on a line to connect the starting point and the end point of the arrow is expressed as "direction". Further, an up-down direction 7 is defined, with a state (state illustrated in FIG. 1A) in which the laminating apparatus 1 is installed usably, as the reference; a front-rear direction 8 is defined, with a surface on which an operation part 12 and a display part 13 are disposed as a front surface; and a left-right direction 9 is defined. while viewing the laminating apparatus 1 from a front position. The up-down direction 7, the front-rear direction 8, and the left-right direction 9 are orthogonal to one another.

### Outline of laminating apparatus 1

As illustrated in FIG. 1A, the laminating apparatus 1 according to this embodiment has a rectangular parallelepiped-shaped casing 11. The operation part 12 and the display part 13 are positioned on the front surface of the casing 11. A discharge port 14 is positioned below the operation part 12 and the display part 13 in the front surface of the casing 11. The laminating apparatus 1 produces a lamination finished product 100 by laminating two types of members.

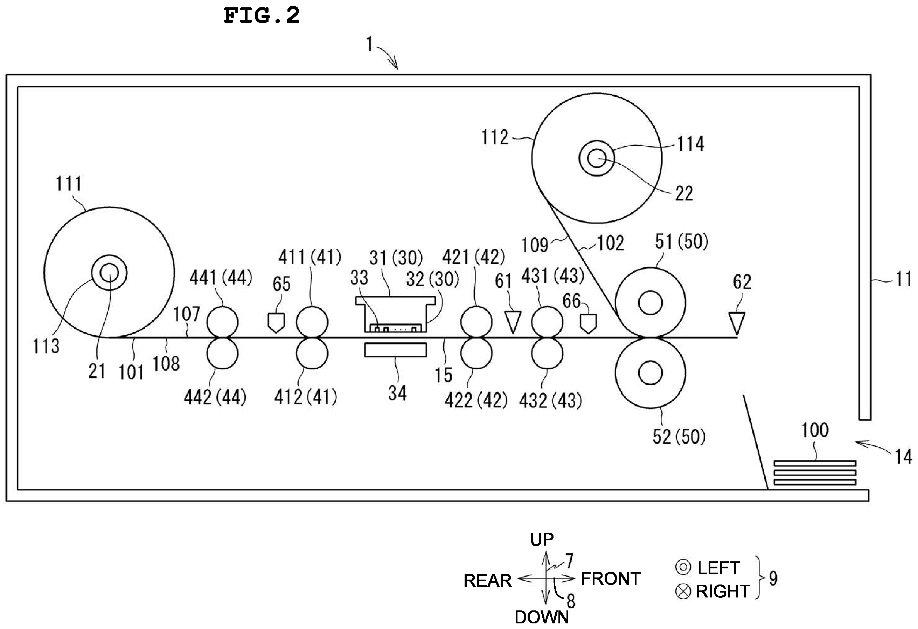

A tape-shaped first member 101 and a second member 102 are supplied to the laminating apparatus 1. As illustrated in FIG. 2, the first member 101 is wound around a cylindrical core member 113 to form a first roll 111. The second member 102 is wound around a cylindrical core member 114 to form a second roll 112. The first roll 111 and the second roll 112 are attached to a first holder 21 and a second holder 22 of the laminating apparatus 1, respectively.

The first member 101 is, for example, a transparent film. As illustrated in FIG. 1B, the second member 102 is a member which has an adhesive layer on at least one surface. The second member 102 is a mount which has, for example, a first adhesive layer 103 on one surface of a tape layer 104 (surface adjacent to the first member 101 in the lamination finished product 100), and a second adhesive layer 105 on the other surface of the tape layer 104. A release sheet 106 is formed on an opposite side of the tape layer 104 with the second adhesive layer 105 interposed therebetween.

Note that any material may be used for the first member 101 and the second member 102. The second member 102 may be, for example, a member made of resin such as PET and PVC (vinyl chloride), synthetic paper such as Yupo Paper (registered trademark), or a member made of metal. The second member 102 may be transparent or opaque. The first member 101 and the second member 102 may have an adhesive layer on one surface, may have an adhesive layer on the other surface, may have adhesive layers on the both surfaces, or may not have any adhesive layer on the both surfaces. In a case where a material, which does not have the adhesive layer, is used, the first member 101 and the second member 102 may be laminated with each other after applying an adhesive, or the first member 101 and the second member 102 may be laminated with each other by means of, for example, thermal welding or bonding under pressure.

With reference to FIG. 2, a recording surface 107 is a surface of the first member 101 on which an image is recorded. A back surface 108 is a surface of the first member 101 which is opposite to the recording surface 107. A lamination surface 109 is a surface of the second member 102 having the first adhesive layer 103.

The laminating apparatus 1 laminates the first member 101 and the second member by contacting the recording surface 107 of the first member 101 and the lamination surface 109 of the second member tightly with each other. The laminating apparatus 1 cuts the member after the lamination into pieces each having a predetermined size. Accordingly, the lamination finished product 100 illustrated in FIG. 1B is produced. The produced lamination finished product 100 is discharged from the discharge port 14.

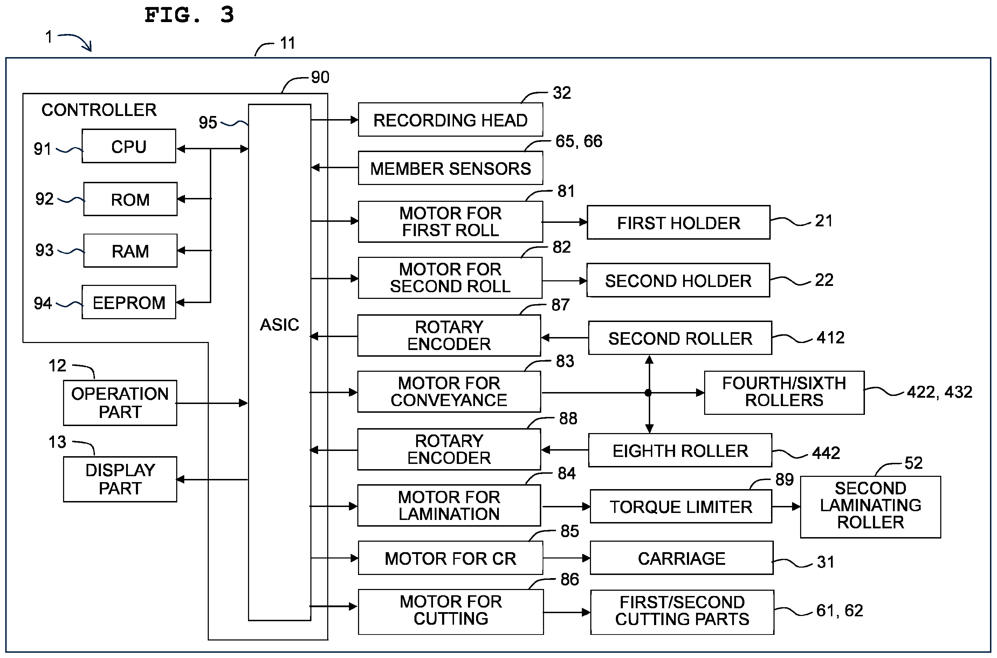

As illustrated in FIG. 2, the laminating apparatus 1 includes, in the casing 11, the first holder 21, the second holder 22, a recording part 30, first to third conveyance rollers 41 to 43, an intermediate roller 44, the laminating roller 50, a first cutting part 61, a second cutting part 62, and member sensors 65, 66. Additionally, the laminating apparatus 1 includes, in the casing 11, a controller 90 and various motors (see FIG. 3). A guide member (not shown) for supporting the first member 101 is provided at a necessary position in the casing 11. Accordingly, a conveyance channel 15 is formed, which extends from the first holder 21 to the second cutting part 62 via the recording part 30, the first cutting part 61, and the laminating roller 50.

### First holder 21 and second holder 22

The first holder 21 and the second holder 22 are members each of which is rotatable about a shaft extending in the left-right direction 9. The first holder 21 has a size which is equivalent to an inner diameter of the core member 113 of the first roll 111. The second holder 22 has a size which is equivalent to an inner diameter of the core member 114 of the second roll 112. Each of the first holder 21 and the second holder 22 is fixed to the casing 11 or a member fixed to the casing 11.

The first holder 21 and the second holder 22 are positioned at positions separated from each other in the casing 11. In the configuration illustrated in FIG. 2, the first holder 21 is positioned in the vicinity of a center in the casing 11 in the up-down direction 7, and the first holder 21 is positioned at a rear position in the casing 11 in the front-rear direction 8. The second holder 22 is positioned at an upper position in the casing 11 in the up-down direction 7, and the second holder 22 is positioned at a front position from the center in the casing 11 in the front-rear direction 8. Note that any position is available for each of the positions of the first holder 21 and the second holder 22 in the casing 11.

Before an operation of the laminating apparatus 1, the first roll 111 is attached to the first holder 21, and the second roll 112 is attached to the second holder 22. The first holder 21 rotatably supports the first roll 111. The second holder 22 rotatably supports the second roll 112. The first member 101 is drawn from the first roll 111 supported by the first holder 21. The second member 102 is drawn from the second roll 112 supported by the second holder 22.

A force, which acts in an orientation to wind the first member 101, is applied to the first holder 21 from a motor 81 for the first roll (see FIG. 3). A force, which acts in an orientation to wind the second member 102, is applied to the second holder 22 from a motor 82 for the second roll (see FIG. 3).

### Recording part 30

The recording part 30 is positioned downstream of the first roll 111 along the conveyance channel 15. The recording part 30 is positioned above the conveyance channel 15 in the up-down direction 7, and the recording part 30 is positioned between the first roll 111 and the first cutting part 61 in the front-rear direction 8. The recording part 30 includes a carriage 31 and a recording head 32. Two guide rails (not shown), which extend in the left-right direction 9 and which have both ends fixed to the casing 11 or a member fixed to the casing 11, are positioned in the casing 11. The carriage 31 is placed on the two guide rails. The carriage 31 receives a driving force from a motor 85 for CR (see FIG. 3), and the carriage 31 is movable in the left-right direction 9.

The recording head 32 is carried on the carriage 31. A plurality of nozzles 33 is formed on the lower surface of the recording head 32. The recording head 32 is movable in the left-right direction 9 in accordance with movement of the carriage 31. A platen 34 is positioned below a movement range of the carriage 31. The recording head 32 ejects inks downwardly from the nozzles 33 based on image data supplied from the controller 90 while moving in the left-right direction 9. Accordingly, the image, which is based on the image data, is recorded on the recording surface 107 of the first member 101 conveyed on the platen 34.

### First to third conveyance rollers 41 to 43 and intermediate roller 44

The first to third conveyance rollers 41 to 43 and the intermediate roller 44 are positioned between the first roll 111 and the laminating roller 50. The intermediate roller 44 and the first conveyance roller 41 are positioned between the first roll 111 and the recording part 30 in the front-rear direction 8. The second conveyance roller 42 and the third conveyance roller 43 are positioned between the recording part 30 and the laminating roller 50 in the front-rear direction 8. The first conveyance roller 41 is positioned at a front position from the intermediate roller 44 in the front-rear direction 8. The third conveyance roller 43 is positioned at a front position from the second conveyance roller 42 in the front-rear direction 8.

The first conveyance roller 41 includes a first roller 411 and a second roller 412. The first roller 411 is positioned just over the second roller 412. The first member 101 passes between the first roller 411 and the second roller 412. During this process, the first roller 411 contacts with the recording surface 107 of the first member 101, and the second roller 412 contacts with the back surface 108 of the first member 101. Accordingly, the first conveyance roller 41 grips the first member 101.

The second roller 412 receives a driving force from a motor 83 for conveyance (see FIG. 3), and the second roller 412 is rotatable about a shaft extending in the left-right direction 9. Accordingly, the first roller 411 is also rotatable about a shaft extending in the left-right direction 9. During this process, a force, which is in an orientation to draw the first member 101 from the first roll 111, acts on the first member 101. Further, the second roller 412 is reversely rotatable while receiving a driving force in a reverse orientation from the motor 83 for conveyance. Accordingly, the first roller 411 is also reversely rotatable. During this process, a force, which is in an orientation to cause the first member 101 to approach the first roll 111, acts on the first member 101.

The second conveyance roller 42 includes a third roller 421 and a fourth roller 422. The third conveyance roller 43 includes a fifth roller 431 and a sixth roller 432. The intermediate roller 44 includes a seventh roller 441 and an eighth roller 442. The configurations and the functions of the second conveyance roller 42, the third conveyance roller 43, and the intermediate roller 44 are the same as the configuration and the function of the first conveyance roller 41, and hence the configurations and the functions are omitted from this description.

Note that in this description, the lower roller of the two rollers included in each of the first to third conveyance rollers 41 to 43 and the intermediate roller 44 receives the driving force from the motor 83 for conveyance. Alternatively, the upper roller may receive the driving force from the motor 83 for conveyance, or both of the upper roller and the lower roller may receive the driving force from the motor 83 for conveyance. Further alternatively, the configuration, in which all of the first to third conveyance rollers 41 to 43 and the intermediate roller 44 receive the driving force from the motor 83 for conveyance, is not necessarily required. The first to third conveyance rollers 41 to 43 and the intermediate roller 44 may receive the driving force independently from distinct motors respectively. The first to third conveyance rollers 41 to 43 and the intermediate roller 44 may receive the driving force from a motor other than the motor for driving the first to third conveyance rollers 41 to 43 and the intermediate roller 44.

### Laminating roller 50

The laminating roller 50 is positioned downstream of the recording part 30 in the conveyance channel 15. The laminating roller 50 is positioned between the first cutting part 61 and the second cutting part 62 in the front-rear direction 8. The laminating roller 50 includes a first laminating roller 51 and a second laminating roller 52. The first laminating roller 51 is positioned just over the second laminating roller 52. The first laminating roller 51 and the second laminating roller 52 grip the first member 101 and the second member 102 by a predetermined force. Accordingly, the first member 101 and the second member 102 are laminated with each other into the lamination finished product 100.

The second member 102, which is drawn from the second roll 112, enters a space between the first laminating roller 51 and the second laminating roller 52. During this process, the lamination surface 109 of the second member 102 faces downward. The first member 101, which has passed through the recording part 30 and the first cutting part 61, enters under the second member 102 between the first laminating roller 51 and the second laminating roller 52. During this process, the recording surface 107 of the first member 101 faces upward.

The second laminating roller 52 receives a driving force from a motor 84 for lamination (see FIG. 3), and the second laminating roller 52 is rotatable about a shaft extending in the left-right direction 9. Accordingly, the first laminating roller 51 is also rotatable about a shaft extending in the left-right direction 9. The first laminating roller 51 and the second laminating roller 52 laminate the first member 101 and the second member 102 by bringing the recording surface 107 of the first member 101 and the lamination surface 109 of the second member 102 in tight contact. Note that the first laminating roller 51 may receive the driving force from the motor 84 for lamination, or both of the first laminating roller 51 and the second laminating roller 52 may receive the driving force from the motor 84 for lamination.

Further, the laminating roller 50 is not necessarily required to laminate the first member 101 and the second member 102. For example, in a case where the laminating apparatus 1 includes a part for performing thermal welding or bonding under pressure at a position downstream of the laminating roller 50, a roller pair, which is disposed at a position upstream of the part and which laminates the first member 101 and the second member 102, is the laminating roller 50.

### First cutting part 61 and second cutting part 62

The first cutting part 61 is positioned downstream of the recording part 30 in the conveyance channel 15. The first cutting part 61 is positioned above the conveyance channel 15 in the up-down direction 7, and the first cutting part 61 is positioned between the second conveyance roller 42 and the laminating roller 50 in the front-rear direction 8. The first cutting part 61 cuts the first member 101 between the second conveyance roller 42 and the laminating roller 50. The second cutting part 62 is positioned downstream of the laminating roller 50 in the conveyance channel 15. The second cutting part 62 is positioned above the conveyance channel 15 in the up-down direction 7, and the second cutting part 62 is positioned at a front position from the laminating roller 50 in the front-rear direction 8. The second cutting part 62 simultaneously cuts the first member 101 and the second member 102 laminated by the laminating roller 50.

The first cutting part 61 has any configuration capable of cutting the first member 101. The second cutting part 62 has any configuration capable of cutting the first member 101 and the second member 102. Each of the first cutting part 61 and the second cutting part 62 may include, for example, a cutter carriage which receives a driving force from a motor 86 for cutting (see FIG. 3) and which is movable in the left-right direction 9, and a cutter which is carried on the cutter carriage. Each of the first cutting part 61 and the second cutting part 62 may include a movable blade which receives the driving force from the motor 86 for cutting and which is movable in the up-down direction 7, and a fixed blade which faces the movable blade.

### Member sensors 65, 66

The member sensors 65, 66 detect the forward end of the first member 101 conveyed along the conveyance channel 15. The member sensor 65 is positioned above the conveyance channel 15 in the up-down direction 7, and the member sensor 65 is positioned between the intermediate roller 44 and the first conveyance roller 41 in the front-rear direction 8. The member sensor 66 is positioned above the conveyance channel 15 in the up-down direction 7, and the member sensor 66 is positioned between the third conveyance roller 43 and the laminating roller 50 in the front-rear direction 8. The member sensor 66 is positioned upstream of the laminating roller 50 in the front-rear direction 8.

The member sensor 65 includes a light-emitting element (not shown) which emits light toward the recording surface 107 of the first member 101 conveyed along the conveyance channel 15, and a light-receiving element (not shown) which receives light reflected by the recording surface 107 of the first member 101. In a case where the first member 101 is located below the member sensor 65, the light-receiving element of the member sensor 65 receives the light reflected by the recording surface 107 of the first member 101, and the amount of light detected by the light-receiving element is larger than a threshold value. On the other hand, in a case where the first member 101 is not located below the member sensor 65, the light-receiving element of the member sensor 65 does not receives the light reflected by the recording surface 107 of the first member 101, and the amount of light detected by the light-receiving element is smaller than the threshold value. The member sensor 66 has the same configuration and the same function as those of the member sensor 65.

Note that in this description, the member sensors 65, 66, each of which includes the light-emitting element and the light-receiving element, are provided above the conveyance channel 15. However, the member sensors 65, 66 as described above may be provided below the conveyance channel 15. Further, each of the member sensors 65, 66 may be a contact sensor which is provided on the left or right of the conveyance channel 15 and which contacts with a left end or a right end of the first member 101 to detect an end portion of the first member 101. Alternatively, the member sensor 65 may be a so-called media sensor carried on the carriage 31.

### Controller 90 and peripheral parts of controller 90

As illustrated in FIG. 3, the controller 90 includes a CPU 91, a ROM 92, a RAM 93, and an EEPROM 94. The ROM 92 stores, for example, programs for controlling various operations of the laminating apparatus 1. The EEPROM 94 stores various types of data to be used in a case where the programs are executed. The RAM 93 is used as a storage area for temporarily recording the various types of data to be used in a case where the CPU 91 executes the programs, and a developing area for data and programs. In a case where the power source of the laminating apparatus 1 is turned ON, the program, which is stored in the ROM 92, is copied and transferred to the RAM 93. The CPU 91 executes the program stored in the RAM 93. Accordingly, the controller 90 performs various types of control.

The operation part 12 and the display part 13 are connected to the ASIC 95. The operation part 12 detects depression of an operation key, and the operation part 12 outputs a signal corresponding to the depressed operation key. The controller 90 identifies the depressed operation key based on the output signal of the operation part 12. The display part 13 displays, on a screen, information relevant to the operation of the laminating apparatus 1 based on an instruction from the controller 90.

The recording head 32 is connected to the ASIC 95. The controller 90 outputs a signal corresponding to image data to the recording head 32 via the ASIC 95. The recording head 32 causes the plurality of nozzles 33 provided on the recording head 32 to eject the inks in accordance with the signal outputted from the controller 90.

The member sensors 65, 66 are connected to the ASIC 95. Each of the member sensors 65, 66 outputs a signal corresponding to the amount of light detected by the light-receiving element. The controller 90 detects the forward end of the first member 101 conveyed along the conveyance channel 15 based on the output signal of the light-receiving element.

### Various motors

The motor 81 for the first roll, the motor 82 for the second roll, the motor 83 for conveyance, the motor 84 for lamination, the motor 85 for CR, and the motor 86 for cutting are connected to the ASIC 95. Driving circuits for controlling the motors are incorporated into the ASIC 95. The controller 90 outputs driving signals for rotating the respective motors to the driving circuits corresponding to the respective motors. The driving circuit outputs a driving current corresponding to the driving signal output from the controller 90 to the corresponding motor. Accordingly, the corresponding motor is rotated. Note that some of the motors described above may be configured by the same motor.

The motor 81 for the first roll generates a power for rotating the first roll 111 supported by the first holder 21. The motor 82 for the second roll generates a power for rotating the second roll 112 supported by the second holder 22. The motor 85 for CR generates a power for moving the carriage 31 in the left-right direction 9. The motor 86 for cutting generates a power for operating the first cutting part 61 and the second cutting part 62.

The motor 83 for conveyance generates a power for rotating the first to third conveyance rollers 41 to 43 and the intermediate roller 44. The power, which is generated by the motor 83 for conveyance, is applied to the second roller 412, the fourth roller 422, the sixth roller 432, and the eighth roller 442. The second roller 412, the fourth roller 422, the sixth roller 432, and the eighth roller 442 receive the power from the motor 83 for conveyance, and the second roller 412, the fourth roller 422, the sixth roller 432, and the eighth roller 442 are rotated about the shafts extending in the left-right direction 9. Accordingly, the first roller 411, the third roller 421, the fifth roller 431, and the seventh roller 441 are also rotated about the shafts extending in the left-right direction 9.

A rotary encoder 87 is mounted to the rotation shaft of the second roller 412. The rotary encoder 87 outputs a signal corresponding to an amount of rotation of the second roller 412. The controller 90 acquires an amount of rotation of the first conveyance roller 41 based on the output signal from the rotary encoder 87. Note that the rotary encoder 87 may be mounted to the rotation shaft of the first roller 411. The amount of rotation of the first conveyance roller 41 can be detected by the rotary encoder 87.

A rotary encoder 88 is mounted to the rotation shaft of the eighth roller 442. The rotary encoder 88 outputs a signal corresponding to an amount of rotation of the eighth roller 442. The controller 90 acquires an amount of rotation of the intermediate roller 44 based on the output signal from the rotary encoder 88. Note that the rotary encoder 88 may be mounted to the rotation shaft of the seventh roller 441. The amount of rotation of the intermediate roller 44 can be detected by the rotary encoder 88.

The motor 84 for lamination is, for example, a stepping motor. The motor 84 for lamination generates a power for rotating the laminating roller 50. The power, which is generated by the motor 84 for lamination, is applied to the second laminating roller 52. A torque limiter 89 intervenes between the motor 84 for lamination and the laminating roller 50. The torque limiter 89 is mounted, for example, to the rotation shaft of the second laminating roller 52. The torque limiter 89 limits the power of the motor 84 for lamination, and the torque limiter 89 transmits the power to the rotation shaft of the second laminating roller 52. An amount of rotation of the laminating roller 50 can be controlled by the stepping motor.

The controller 90 drives the motor 84 for conveyance to rotate the first to third conveyance rollers 41 to 43 and the intermediate roller 44, and the controller 90 drives the motor 84 for lamination to rotate the laminating roller 50. The controller 90 drives the motor 81 for the first roll to apply force to the first roll 111, and the controller 90 drives the motor 82 for the second roll to apply force to the second roll 112. The controller 90 drives the motor 85 for CR to move the carriage 31, and the controller 90 drives the motor 86 for cutting to operate the first cutting part 61 and the second cutting part 62.

In the laminating apparatus 1, the first to third conveyance rollers 41 to 43 and the intermediate roller 44 convey the first member 101 in the conveyance direction (front-rear direction 8). The recording part 30 records the image on the first member 101 conveyed by the first to third conveyance rollers 41 to 43 and the intermediate roller 44. The laminating roller 50 laminates the first member 101 on which the image has been recorded by the recording part 30 with the second member 202. Note that the first conveyance roller 41 is an example of the conveyance roller.

### Laminating process by controller 90

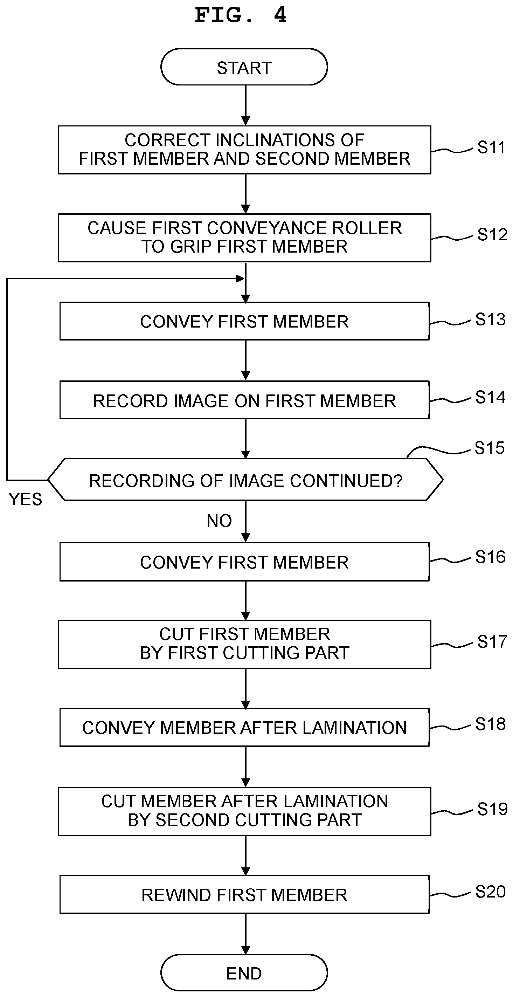

With reference to FIG. 4, a laminating process performed by the controller 90 will be described. The laminating process illustrated in FIG. 4 is performed by causing the CPU 91 to execute the program stored in the RAM 93. The controller 90 performs the laminating process, for example, in a case where the controller 90 receives an instruction to perform the laminating process from the operation part 12. Note that the second conveyance roller 42 and the third conveyance roller 43 have small roles in the laminating process. Therefore, description relevant to the second conveyance roller 42 and the third conveyance roller 43 will be omitted below.

In the following description, the forward end (downstream end) of the first member 101 is referred to as "forward end P". The controller 90 updates a count value stored in the RAM 93 based on the output signal from the rotary encoder 87 (FIG. 3) during the performance of the laminating process. The controller 90 acquires the amount of rotation of the first conveyance roller 41 based on the count value and a position of the forward end P of the first member 101 on the conveyance channel 15.

A user inserts the forward end P of the first member 101 drawn from the first roll 111 into the space between the seventh roller 441 and the eighth roller 442 before starting the use of the laminating apparatus 1. The user inserts the forward end of the second member 102 drawn from the second roll 112 into the space between the first laminating roller 51 and the second laminating roller 52.

The controller 90 corrects inclinations of the first member 101 and the second member 102 at the beginning of the laminating process (S11). In S11, the controller 90 drives the motor 81 for the first roll and the motor 83 for conveyance, and the controller 90 corrects the inclination of the first member 101 by alternately performing a process for drawing the first member 101 from the first roll 111 and a process for rewinding the first member 101 around the first roll 111 once or more respectively.

Further, in S11, the controller 90 drives the motor 82 for the second roll and the motor 84 for lamination, and the controller 90 corrects the inclination of the second member 102 by alternately performing a process for drawing the second member 102 from the second roll 112 and a process for rewinding the second member 102 around the second roll 112 once or more respectively.

Note that the controller 90 may concurrently perform the correction of the inclination of the first member 101 and the correction of the inclination of the second member 102 in S11. Alternatively, the controller 90 may previously perform any one of the correction of the inclination of the first member 101 and the correction of the inclination of the second member 102, and then the controller 90 may perform the other.

Subsequently, the controller 90 causes the first conveyance roller 41 to grip the first member 101 (S12). In S12, the controller 90 drives the motor 83 for conveyance to apply, to the first conveyance roller 41, a force acting in the orientation to draw the first member 101. As the forward end P of the first member 101 arrives at the first conveyance roller 41, the first conveyance roller 41 grips the first member 101. In S12, the controller 90 drives the motor 81 for the first roll to apply, to the first roll 111, a force acting in the orientation to rewind the first member 101. However, the force acting in the orientation to rewind the first member 101 is smaller than the force acting in the orientation to draw the first member 101.

Subsequently, the controller 90 conveys the first member 101 (S13). In S13, the controller 90 drives the motor 83 for conveyance to rotate the intermediate roller 44 and the first conveyance roller 41, and the controller 90 causes the intermediate roller 44 and the first conveyance roller 41 to convey the first member 101.

Subsequently, the controller 90 stops the conveyance of the first member 101, and the controller 90 drives the recording part 30 to record the image on the first member 101 (S14). In S14, the controller 90 stops the driving of the motor 83 for conveyance. The controller 90 stops the rotation of the intermediate roller 44 and the first conveyance roller 41 to stop the first member 101. During a period in which the first member 101 is stopped, the inks are ejected from the recording head 32 of the recording part 30 to the recording surface 107 of the first member 101. Accordingly, the image is recorded on a part of the recording surface 107 of the first member 101.

Subsequently, the controller 90 determines whether the recording of the image is continued (S15). In a case where the recording of the image is continued (S15: Yes), the controller 90 proceeds with S13. The controller 90 repeatedly performs S13 and S14 until the controller 90 determines to be "No" in S15. Accordingly, the image is successively recorded on the first member 101 in an orientation from the downstream to the upstream in the conveyance direction. Note that in this embodiment, the conveyance direction is the front-rear direction 8.

The controller 90 performs S13, and then the controller 90 determines whether the forward end P of the first member 101 arrives at the vicinity of the laminating roller 50. The controller 90 determines whether the forward end P of the first member 101 arrives at the vicinity of the laminating roller 50 based on the output signal from the member sensor 66. Note that the controller 90 may determine whether the forward end P of the first member 101 arrives at the vicinity of the laminating roller 50 without referring to the output signal of the member sensor 66.

In a case where the controller 90 determines that the forward end P of the first member 101 arrives at the vicinity of the laminating roller 50, the controller 90 starts the driving of the laminating roller 50. In particular, the controller 90 drives the motor 84 for lamination to apply, to the laminating roller 50, a force acting in an orientation to draw the second member 102 (details will be described later). During this process, the controller 90 drives the motor 83 for the second roll to apply, to the second roll 112, a force acting in an orientation to rewind the second member 102. However, the force acting in the orientation to rewind the second member 102 is smaller than the force acting in the orientation to draw the second member 102. After the process as described above, the laminating roller 50 laminates the recording surface 107 of the first member 101 and the lamination surface 109 of the second member 102.

In a case where the controller 90 determines in S15 that the recording of the image is not continued (S15: No), the controller 90 proceeds with S16. In this case, the controller 90 conveys the first member 101 (S16) until the cutting position, which is located upstream of a range in which the image is recorded on the first member 101, arrives at the cutting position of the first cutting part 61.

Subsequently, the controller 90 causes the first cutting part 61 to cut the first member 101 (S17). The controller 90 drives the motor 86 for cutting in S17 to operate the first cutting part 61. The first cutting part 61 cuts the first member 101 at the cutting position.

Subsequently, the controller 90 conveys the first member 101 and the second member 102 after the lamination (S18). The controller 90 drives the motor 84 for lamination in S18 to convey the first member 101 and the second member 102 after the lamination until the cutting position of the first member 101 and the second member 102 after the lamination arrives at the cutting position of the second cutting part 62.

Subsequently, the controller 90 causes the second cutting part 62 to cut the laminated first member 101 and the second member 102 (S19). The controller 90 drives the motor 86 for cutting in S19 to operate the second cutting part 62. The second cutting part 62 cuts the first member 101 and the second member 102 after the lamination at the cutting position.

Subsequently, the controller 90 causes the first roll 111 to rewind the first member 101 (S20). The controller 90 drives the motor 83 for conveyance in the reverse orientation in S20 to rotate the intermediate roller 44 and the first conveyance roller 41 in the reverse orientation. The intermediate roller 44 and the first conveyance roller 41 causes the force to act in the orientation to wind the first member 101. Also during this process, the force, which acts in the orientation to wind the first member 101, is applied from the motor 81 for the first roll to the first roll 111.

Note that in the laminating process illustrated in FIG. 4, S13 and S14, which are performed until the start of the driving of the laminating roller 50, are examples of the conveying process for conveying the first member 101, on which the image has been recorded by the recording part 30, to the laminating roller 50 by the first conveyance roller 41. The conveying process is performed in a case where the second member 102 is gripped by the laminating roller 50 and the first member 101 is not gripped by the laminating roller 50. In the conveying process, the process (S14) for causing the recording part 30 to perform the recording operation for recording the image on the first member 101 and the process for causing the first conveyance roller 41 to perform the conveyance operation for conveying the first member 101 to the next recording position and stopping the first member 101 are alternately performed.

### Driving of laminating roller 50

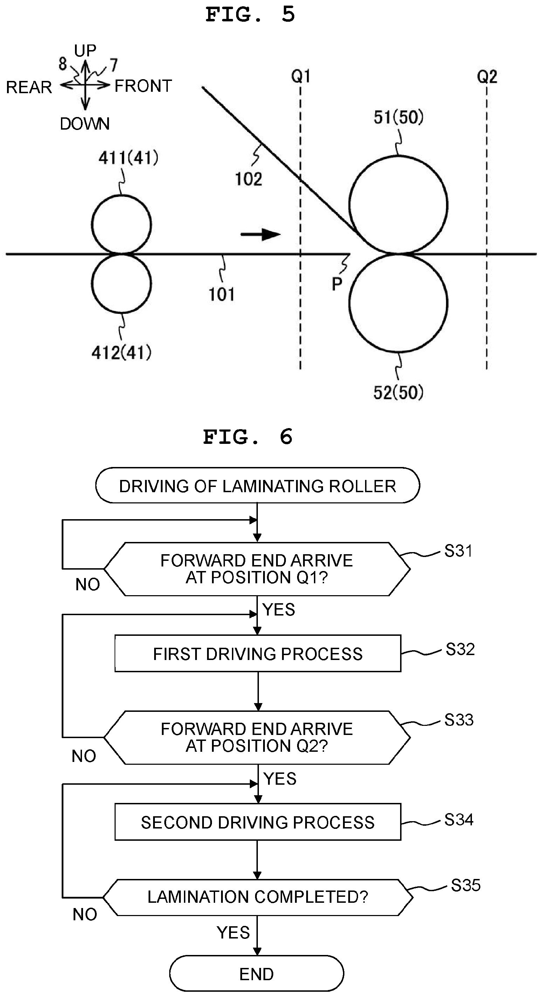

As illustrated in FIG. 5, in the laminating apparatus 1, a first position Q1 is set at a rear position from the laminating roller 50 in the front-rear direction 8, and a second position Q2 is set at a front position from the laminating roller 50. The first position Q1 is positioned between the first conveyance roller 41 and the laminating roller 50. Preferably, the first position Q1 is positioned between the third conveyance roller 43 and the laminating roller 50. The first position Q1 may be positioned at the same position as that of the member sensor 66 in the front-rear direction 8, or the first position Q1 may be positioned at a front position or a rear position from the member sensor 66. The second position Q2 is positioned between the laminating roller 50 and the discharge port 14.

With reference to FIG. 6, a driving process of the laminating roller 50 operated by the controller 90 will be described. The driving process of the laminating roller 50 illustrated in FIG. 6 is performed by causing CPU 91 to execute the program stored in the RAM 93. The controller 90 performs the driving process of the laminating roller 50 after performing S12 illustrated in FIG. 4. The laminating roller 50 is stopped at a point in time at which the driving process of the laminating roller 50 is started. The first member 101 is gripped by the first conveyance roller 41, but the first member 101 is not gripped by the laminating roller 50. The second member 102 is gripped by the laminating roller 50.

At the beginning of the driving process of the laminating roller 50, the controller 90 determines whether the forward end P of the first member 101 arrives at the first position Q1 by the next conveyance (S31). In other words, the controller 90 determines in S31 whether the next conveyance is such conveyance that the forward end P of the first member 101 stops downstream of the first position Q1. In a case where the forward end P of the first member 101 does not arrive at the first position Q1 (S31: No), the controller 90 proceeds with S31. In a case where the forward end P of the first member 101 arrives at the first position Q1 (S31: Yes), the controller 90 proceeds with S32.

In the latter, the controller 90 performs a first driving process for driving the laminating roller 50 (S33). Subsequently, the controller 90 determines whether the forward end P of the first member 101 arrives at the second position Q2 by the next conveyance. In other words, the controller 90 determines in S33 whether the next conveyance is such conveyance that the forward end P of the first member 101 stops downstream of the second position Q2. In a case where the forward end P of the first member 101 does not arrive at the second position Q2 (S33: No), the controller 90 proceeds with S32. In a case where the forward end P of the first member 101 arrives at the second position Q2 (S33: Yes), the controller 90 proceeds with S34.

In the latter, the controller 90 performs a second driving process for driving the laminating roller 50 (S34). The second driving process is a process different from the first driving process in S32. Subsequently, the controller 90 determines whether the lamination has been completed (S35). The controller 90 determines in S35 that the lamination has been completed, for example, in a case where the amount of conveyance from an initial position of the first member 101 arrives at a predetermined amount. In a case where the lamination has not been completed (S35: No), the controller 90 proceeds with S34. In a case where the lamination has been completed (S35: Yes), the controller 90 ends the driving process of the laminating roller 50.

### First driving process

The first driving process is performed before the forward end P of the first member 101 arrives at the laminating roller 50 by the conveying process (S13 and S14). The controller 90 drives the laminating roller 50 in the first driving process. Further, the controller 90 stops the laminating roller 50 during a period in which the rotation is stopped for the first to third conveyance rollers 41 to 43 and the intermediate roller 44 in the first driving process. In other words, the controller 90 stops the laminating roller 50 after the controller 90 causes the first to third conveyance rollers 41 to 43 and the intermediate roller 44 to complete the conveyance operation in the first driving process.

### Second driving process

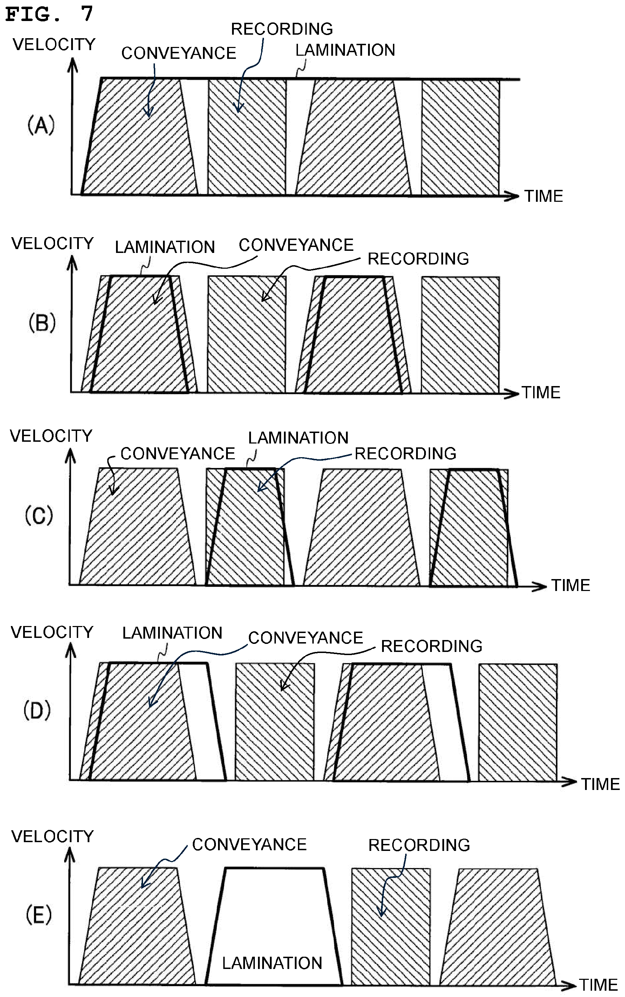

The controller 90 drives the laminating roller 50 in the second driving process, for example, in any one of modes illustrated in FIG. 7. With reference to FIG. 7, hatched trapezoids indicate periods for the first conveyance roller 41 to convey the first member 101. Hatched rectangles indicate periods for the recording part 30 to record the image on the first member 101. Trapezoids depicted with thick lines indicate periods for driving the laminating roller 50. Vertical axes of the two types of trapezoids indicate conveying velocities of the first member 101. Note that the conveyance period by the first conveyance roller 41 is not overlapped with the recording period by the recording part 30. In FIG. 7, the maximum conveying velocity of the first member 101 by the first conveyance roller 41 is the same as the maximum conveying velocity of the first member 101 by the laminating roller 50. An area of the trapezoid indicates a conveyance distance of the first member 101.

In a first driving mode illustrated in FIG. 7A, the controller 90 always drives the laminating roller 50 in the second driving process. In the first driving mode, the controller 90 continuously drives the laminating roller 50 during a period in which the conveyance operation and the recording operation are performed, and the controller 90 drives the laminating roller 50 such that a tension is continuously applied between the first conveyance roller 41 and the laminating roller 50.

In a second driving mode illustrated in FIG. 7B, the controller 90 starts the driving of the laminating roller 50 after starting the driving of the first conveyance roller 41. The controller 90 completes the driving of the laminating roller 50 before completing the driving of the first conveyance roller 41.

In a third driving mode illustrated in FIG. 7C, the controller 90 starts the driving of the laminating roller 50 in a case where the operation of the recording part 30 is started. The controller 90 completes the driving of the laminating roller 50 after completing the operation by the recording part 30 and before starting the driving of the first conveyance roller 41.

In the second and third driving modes, the conveyance distance of the first member 101 by the laminating roller 50 is smaller than the conveyance distance of the first member 101 by the first conveyance roller 41. Further, no tension is applied to the first member 101 between the first conveyance roller 41 and the laminating roller 50.

As described above, in the second and third driving modes, the controller 90 drives the laminating roller 50 such that the conveyance distance of the first member 101 by the laminating roller 50 is smaller than the conveyance distance of the first member 101 by the first conveyance roller 41. Further, in the second and third driving modes, the controller 90 drives the laminating roller 50 such that no tension is applied to the first member 101 between the first conveyance roller 41 and the laminating roller 50 during a period in which the conveyance operation and the recording operation are performed.

In a fourth driving mode illustrated in FIG. 7D, the controller 90 starts the driving of the laminating roller 50 after starting the driving of the first conveyance roller 41. The controller 90 completes the driving of the laminating roller 50 after completing the driving of the first conveyance roller 41 and before starting the operation by the recording part 30. In a fifth driving mode illustrated in FIG. 7E, the controller 90 starts the driving of the laminating roller 50 after completing the driving of the first conveyance roller 41. The controller 90 completes the driving of the laminating roller 50 before starting the operation of the recording part 30.

In the fourth and fifth driving modes, the conveyance distance of the first member 101 by the laminating roller 50 is larger than the conveyance distance of the first member 101 by the first conveyance roller 41. Further, no tension is applied to the first member 101 between the first conveyance roller 41 and the laminating roller 50 during a period in which the conveyance operation is performed. The recording operation is performed after applying tension to the first member 101 between the first conveyance roller 41 and the laminating roller 50.

As described above, in the fourth and fifth driving modes, the controller 90 drives the laminating roller 50 such that no tension is applied to the first member 101 between the first conveyance roller 41 and the laminating roller 50 during the period in which the conveyance operation is performed, and the recording operation is performed after applying the tension to the first member 101 between the first conveyance roller 41 and the laminating roller 50. Further, in the fourth and fifth driving modes, the controller 90 drives the laminating roller 50 such that the conveyance distance of the first member 101 by the laminating roller 50 is larger than the conveyance distance of the first member 101 by the first conveyance roller 41.

In the third and fifth driving modes, the controller 90 starts the driving of the laminating roller 50 after causing the first conveyance roller 41 to complete the conveyance operation. In the second and fourth driving modes, the controller 90 causes the first conveyance roller 41 to start the conveyance operation. The controller 90 starts the driving of the laminating roller 50 before completing the conveyance operation. In the third driving mode, the controller 90 completes the driving of the laminating roller 50 after causing the recording part 30 to start the recording operation.

### Function and effect of embodiments

As described above, the laminating apparatus 1 according to the embodiment of the present invention includes the recording part 30, the first conveyance roller 41 (conveyance roller), the laminating roller 50, the controller 90, and the discharge port 14. The controller 90 performs the conveying process (S13, S14) for causing the first conveyance roller 41 to convey the first member 101, on which the image has been recorded by the recording part 30, to the laminating roller 50, and the first driving process (S32) for driving the laminating roller 50. The controller 90 starts the first driving process before the forward end P of the first member 101 arrives at the laminating roller 50 (S31: Yes) by the conveying process.

The forward end P of the first member 101 is not necessarily parallel to the axis of the laminating roller 50. The forward end P of the first member 101 is inclined in some cases, or the forward end P of the first member 101 is not linear in other cases. Accordingly, in a case where the forward end P of the first member 101 contacts with the laminating roller 50 in the stopped state, the position of the first member 101 with respect to the second member 102 is deviated in some cases. In a case where the driving of the laminating roller 50 is started in such a state, the lamination is performed while remaining the positional deviation between the first member 101 and the second member 102. Therefore, the lamination quality is deteriorated.

According to the laminating apparatus 1 concerning the embodiment of the present invention, the driving of the laminating roller 50 is started before the forward end P of the first member 101 arrives at the laminating roller 50. Accordingly, the first member 101 and the second member 102 can be laminated with each other, for example, immediately after the inclined forward end P of the first member 101 arrives at the laminating roller 50. Therefore, the change in posture of the first member 101 can be reduced before the forward end P of the first member 101 is gripped by the laminating roller 50 as a result of abutment of the forward end P of the first member 101 against the laminating roller 50. Therefore, the deterioration in the lamination quality can be reduced.

Further, in a case where the second member 102 is gripped by the laminating roller 50, and the first member 101 is not gripped by the laminating roller 50 (FIG. 5), the controller 90 alternately performs, in the conveying process, the process (S14) for causing the recording part 30 to perform the recording operation for recording the image on the first member 101 and the process (S13) for causing the first conveyance roller 41 to perform the conveyance operation for conveying the first member 101 to the next recording position and stopping the first member 101 at the next recording position, and the controller 90 stops the laminating roller 50 after causing the first conveyance roller 41 to complete the conveyance operation in the first driving process.

In a case where the first driving process is started before the forward end P of the first member 101 arrives at the laminating roller 50 in such a state that the second member 102 is gripped by the laminating roller 50, the first member 101 does not necessarily arrive at the laminating roller 50 in a case where the first member 101 is conveyed to the next recording position and the first member 101 is stopped at the next recording position. In a case where the laminating roller 50 is continuously driven in the state as described above, only the second member 102 is unnecessarily conveyed. According to the laminating apparatus 1 concerning the embodiment of the present invention, unnecessary conveyance of the second member 102 can be avoided by stopping the laminating roller 50 after causing the first conveyance roller 41 to complete the conveyance operation.

Further, in a case where the first member 101 is conveyed, the controller 90 does not perform the first driving process in a case where the first member 101 is conveyed such that the forward end P of the first member 101 is stopped at the position upstream in the conveyance direction of the first position Q1 between the first conveyance roller 41 and the laminating roller 50 (during the period of S31: No), or the controller 90 performs the first driving process in a case where the first member 101 is conveyed such that the forward end P of the first member 101 is stopped at the position downstream in the conveyance direction from the first position P1 (after the situation of S31: Yes).

In a case where the forward end P of the first member 101 does not arrive at the first position P1 upstream from the laminating roller 50 (i.e., in a case where the distance is sufficient between the forward end P of the first member 101 and the laminating roller 50), the forward end P of the first member 101 does not arrive at the laminating roller 50 in a case where the conveyance operation is performed to convey the first member 101 to the next recording position and stop the first member 101 at the next recording position even in a case where the position of the forward end P of the first member 101 is dispersed.

On the other hand, in a case where the forward end P of the first member 101 is located downstream from the first position P1 (i.e., in a case where the distance is insufficient between the forward end P of the first member 101 and the laminating roller 50), the forward end P of the first member 101 arrives at the laminating roller 50 in some cases, or the forward end P of the first member 101 does not arrive at the laminating roller 50 in other cases in a case where the conveyance operation is performed.

In view of the above, in a case where the forward end P of the first member 101 is positioned upstream from the first position P1, the first driving process is not performed. In a case where the forward end P of the first member 101 is positioned downstream from the first position P1, the first driving process is performed. Accordingly, unnecessary convey of the second member 102 can be avoided within a range in which the forward end P of the first member 101 reliably does not arrive at the laminating roller 50.

Further, the controller 90 performs the first driving process in a case where the first member 101 is conveyed such that the forward end P of the first member 101 is stopped at the position upstream in the conveyance direction from the second position Q2 between the laminating roller 50 and the discharge port 14 (during the period of S33: No), or the controller 90 performs the second driving process different from the first driving process in a case where the first member 101 is conveyed such that the forward end P of the first member 101 is stopped at the position downstream in the conveyance direction from the second position Q2 (in the situation after S33: Yes).

Whether the forward end P of the first member 101 is gripped by the laminating roller 50 is not clear within a range between the first position P1 and the second position P2. Therefore, in a case where the forward end P of the first member 101 is positioned within this range, unnecessary conveyance of the second member 102 can be avoided. On the other hand, in a case where the forward end P of the first member 101 is positioned downstream in the conveyance direction from the second position P2, the forward end P of the first member 101 certainly arrives at the laminating roller 50. Therefore, the performance of the first driving process is unnecessary for the controller 90.

Further, in the first driving mode of the second driving process (FIG. 7A), the controller 90 drives the laminating roller 50 such that the tension is continuously applied to the first member 101 between the first conveyance roller 41 and the laminating roller 50 during the period in which the controller 90 performs the conveyance operation and the recording operation. In this driving mode, the controller 90 continuously drives the laminating roller 50 during the period in which the conveyance operation and the recording operation are performed. Therefore, the conveyance operation and the recording operation are performed in the state where the tension is applied to the first member 101 between the first conveyance roller 41 and the laminating roller 50. Therefore, no slack appears in the first member 101, and deterioration in the lamination quality can be reduced.

Further, in the second and third driving modes of the second driving process (FIG. 7B and FIG. 7C), the controller 90 drives the laminating roller 50 such that the tension is not applied to the first member 101 between the first conveyance roller 41 and the laminating roller 50 during the period in which the controller 90 performs the conveyance operation and the recording operation. Therefore, the conveyance accuracy of the conveyance operation is improved by performing the conveyance operation and the recording operation in the state where the tension is not applied to the first member 101 between the first conveyance roller 41 and the laminating roller 50. Deterioration in the lamination quality can be reduced.

Further, in these driving modes, the controller 90 drives the laminating roller 50 such that the conveyance distance of the first member 101 by the laminating roller 50 is smaller than the conveyance distance of the first member 101 by the first conveyance roller 41. The tension is successfully not applied to the first member by decreasing the conveyance distance by the laminating roller 50 as compared with the conveyance distance by the first conveyance roller 41 as described above. Accordingly, the conveyance accuracy of the conveyance operation is improved by performing the conveyance operation and the recording operation in the state where the tension is not applied to the first member 101 between the first conveyance roller 41 and the laminating roller 50. Deterioration in the lamination quality can be reduced.

Further, in the fourth and fifth driving modes of the second driving process (FIG. 7D and FIG. 7E), the controller 90 drives the laminating roller 50 such that the tension is not applied to the first member 101 between the first conveyance roller 41 and the laminating roller 50 during the period in which the controller 90 performs the conveyance operation, and the controller 90 performs the recording operation after the tension is applied to the first member 101 between the first conveyance roller 41 and the laminating roller 50. In a case where the conveyance operation is performed in the state where the tension is not applied to the first member 101 between the first conveyance roller 41 and the laminating roller 50, no extra force is applied during the conveyance. Therefore, the conveyance accuracy is raised as compared with the state where the tension is applied. After that, the recording operation is performed after disappearing the slack by applying the tension to the first member 101 between the first conveyance roller 41 and the laminating roller 50. Accordingly, deterioration in the printing quality, which would be otherwise caused by the slack, can be reduced as well.

Further, the controller 90 drives the laminating roller 50 such that the conveyance distance of the first member 101 brought about by the laminating roller 50 is larger than the conveyance distance of the first member 101 brought about by the first conveyance roller 41. The tension, which is appropriate for the lamination, can be applied to the first member 101 by increasing the conveyance distance brought about by the laminating roller 50 as compared with the conveyance distance brought about by the first conveyance roller 41 as described above. Accordingly, the slack of the first member can be disappeared, and deterioration in the lamination quality can be reduced by performing the conveyance operation and the recording operation in the state in which the tension is applied to the first member 101 between the first conveyance roller 41 and the laminating roller 50.

Further, in the third and fifth driving modes of the second driving process (FIG. 7C and FIG. 7E), the controller 90 starts the driving of the laminating roller 50 after the controller 90 causes the first conveyance roller 41 to complete the conveyance operation. Therefore, the conveyance operation and the driving of the laminating roller are not performed in overlapped times. Accordingly, the influence of the tension on the first member 101 during the conveyance can be appropriately managed.

Further, in the second and fourth driving modes of the second driving process (FIG. 7B and FIG. 7D), the controller 90 starts the driving of the laminating roller 50 after the controller 90 causes the first conveyance roller to start the conveyance operation and before the controller 90 causes the first conveyance roller 41 to complete the conveyance operation. Therefore, the conveyance operation and the driving of the laminating roller are performed in the overlapped times. Accordingly, the time, which is required until the two operations are completed, can be shortened.

Further, in the third driving mode of the second driving process (FIG. 7C), the controller 90 completes the driving of the laminating roller 50 after the controller 90 causes the recording part 30 to start the recording operation. Therefore, the recording operation and the driving of the laminating roller are performed in the overlapped times. Accordingly, the time, which is required until the two operations are completed, can be shortened.

### Modifications

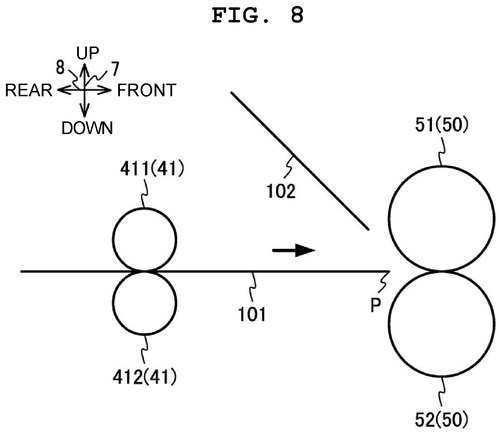

Various modifications can be configured for the laminating apparatus 1 according to the embodiment of the present invention. In the laminating apparatus 1, the controller 90 performs the first conveying process for starting the driving of the laminating roller 50 in a case where the second member 102 is gripped by the laminating roller 50, and the first member 101 is not gripped by the laminating roller 50 (FIG. 5). In a laminating apparatus concerning a modification, the controller 90 may perform the first driving process for starting the driving of the laminating roller 50 in a case where both of the first member 101 and the second member 102 are not gripped by the laminating roller 50 (see FIG. 8). In the laminating apparatus 1, the controller 90 stops the laminating roller 50 after causing the first conveyance roller 41 to complete the conveyance operation in the first driving process. In a laminating apparatus concerning a modification, the controller 90 may not stop the laminating roller 50.

In a laminating apparatus concerning a modification, the controller 90 may drive the laminating roller 50 in a mode other than the five driving modes illustrated in FIG. 7A to FIG. 7E in the second driving process. Further, in the second driving process, any duration of the period for causing the first conveyance roller 41 to convey the first member 101, any duration of the period for causing the recording part 30 to record the image on the first member 101, and any duration of the period for causing the laminating roller 50 to laminate the first member 101 and the second member 102 are available. Further, in the second driving process, the maximum conveyance velocity of the first member 101 by the first conveyance roller 41 may be different from the maximum conveyance velocity of the first member 101 by the laminating roller 50. Further, in the second driving process, any accelerations (velocities to change the conveyance velocities) of the first conveyance roller 41 and the laminating roller 50 are available.

### Reference Signs List

1: laminating apparatus, 14: discharge port, 30: recording part, 41: first conveyance roller (conveyance roller), 50: laminating roller, 90: controller, 101: first member, 102: second member, P: forward end, Q1: first position, Q2: second position.

## Claims

1. A laminating apparatus comprising:
a conveyance roller configured to convey a first member;
a recording part configured to record an image on the first member;
a laminating roller configured to laminate the first member, on which the image has been recorded, and a second member; and
a controller,
wherein the controller is configured to perform:
a conveying process for causing the conveyance roller to convey the first member, on which the image has been recorded by the recording part, to the laminating roller; and
a first driving process for driving the laminating roller, and
the controller is configured to start the first driving process before a forward end of the first member arrives at the laminating roller by the conveying process.

2. The laminating apparatus according to claim 1, wherein
in a case where the second member is gripped by the laminating roller, and the first member is not gripped by the laminating roller,
the controller is configured to alternately perform, in the conveying process, a process for causing the recording part to perform a recording operation for recording the image on the first member and a process for causing the conveyance roller to perform a conveyance operation for conveying the first member to a next recording position and stopping the first member at the next recording position, and
the controller is configured to stop the laminating roller after causing the conveyance roller to complete the conveyance operation in the first driving process.

3. The laminating apparatus according to claim 2, wherein
in a case where the controller causes the first member to be conveyed such that the forward end of the first member is stopped at a position upstream in a conveyance direction of a first position between the conveyance roller and the laminating roller, the controller is configured not to perform the first driving process, and
in a case where the controller causes the first member to be conveyed such that the forward end of the first member is stopped at a position downstream in the conveyance direction of the first position, the controller is configured to performs the first driving process.

4. The laminating apparatus according to claim 3, further comprising:
a discharge port from which a lamination finished product is discharged, wherein
in a case where the controller causes the first member to be conveyed such that the forward end of the first member is stopped at a position upstream in the conveyance direction of a second position between the laminating roller and the discharge port, the controller is configured to perform the first driving process, and
in a case where the controller causes the first member to be conveyed such that the forward end of the first member is stopped at a position downstream in the conveyance direction of the second position, the controller is configured to perform a second driving process different from the first driving process.

5. The laminating apparatus according to claim 4, wherein during a period in which the controller performs the conveyance operation and the recording operation in the second driving process, the controller is configured to drive the laminating roller such that tension is continuously applied to the first member between the conveyance roller and the laminating roller.

6. The laminating apparatus according to claim 4, wherein during a period in which the controller performs the conveyance operation and the recording operation in the second driving process, the controller is configured to drive the laminating roller such that tension is not applied to the first member between the conveyance roller and the laminating roller.

7. The laminating apparatus according to claim 4, wherein during a period in which the controller performs the conveyance operation in the second driving process, the controller is configured to drive the laminating roller such that tension is not applied to the first member between the conveyance roller and the laminating roller, and the controller is configured to perform the recording operation after the tension is applied to the first member between the conveyance roller and the laminating roller.

8. The laminating apparatus according to claim 4, wherein during a period in which the controller performs the conveyance operation and the recording operation in the second driving process, the controller is configured to continuously drive the laminating roller.

9. The laminating apparatus according to claim 4, wherein in the second driving process, the controller is configured to drive the laminating roller such that a conveyance distance over which the first member is conveyed by the laminating roller is smaller than a conveyance distance over which the first member is conveyed by the conveyance roller.

10. The laminating apparatus according to claim 4, wherein in the second driving process, the controller is configured to drive the laminating roller such that a conveyance distance over which the first member is conveyed by the laminating roller is larger than a conveyance distance over which the first member is conveyed by the conveyance roller.

11. The laminating apparatus according to claim 9 or 10, wherein in the second driving process, the controller is configured to start driving of the laminating roller after the controller causes the conveyance roller to complete the conveyance operation.

12. The laminating apparatus according to claim 9 or 10, wherein in the second driving process, the controller is configured to start driving of the laminating roller, after the controller causes the conveyance roller to start the conveyance operation and before the controller causes the conveyance roller to complete the conveyance operation .

13. The laminating apparatus according to claim 9, wherein in the second driving process, the controller is configured to complete driving of the laminating roller after the controller causes the recording part to start the recording operation.
